# EUROPEAN PATENT SPECIFICATION

(11) **EP 3 473 904 B1**
(45) Date of publication and mention of the grant of the patent: **10.06.2020**
(21) Application number: 17197573.3
(22) Date of filing: 20.10.2017
(51) Int. Cl.: F16K 31/44, F16F 1/12

(54) **VALVE ACTUATOR**
VENTILAKTUATOR
ACTIONNEUR DE SOUPAPE

(43) Date of publication of application: 24.04.2019
(73) Proprietor: Siemens Schweiz AG, 8047 Zürich (CH)
(72) Inventor: Eggert, Dominik, 8046 Zürich (CH); Evertz, Jörg, 8903 Birmensdorf (CH)
(74) Representative: Maier, Daniel Oliver

(56) References cited:
- US-A- 6 085 387
- US-A1- 2004 237 259

## Description

### Background

The present disclosure relates to an adjustable valve actuator. More particularly, the present disclosure focuses on an adjustable valve actuator with a helical compression spring and with a seat anchored to the spring.

Valves generally comprise a fluid path and a flow control member situated in the fluid path. A stem and / or a plunger is typically anchored to the flow control member. Accordingly, the flow control member can be set in an open position and / or in a closed position by displacement of the stem and / or of the plunger.

By coupling the stem and / or the plunger to an actuator, the position of the flow control member can be set automatically. Ideally, the valve actuator is arranged outside the enclosure surrounding the flow control member. By employing an external valve actuator, the actuator is isolated or substantially isolated from potentially acidic and / or otherwise hazardous fluids flowing through the fluid path. Any adverse influences of fluids inside the enclosure on the valve actuator are thus inhibited.

During manufacture and / or commissioning, a valve actuator needs be coupled to a valve shaft. To ensure reliable operation of the valve, the valve actuator must be aligned with the stem and / or with the plunger. That is, the valve actuator has to be coupled to the stem such that at least one position of the actuator is commensurate with a position such as an open or a closed position of the flow control member. Ideally, a first position of the actuator is commensurate with an open position of the flow control member and a second position is commensurate with a closed position.

A patent application EP0975907A1, tension-spring return rotary actuator, was filed on 17 April 1998. The patent application led to a granted patent EP0975907B1. The grant of European patent EP0975907B1 was mentioned in the bulletin on 11 December 2002. EP0975907A1 teaches a cartridge 14 that houses a spring rod 52. A spring 54 surrounds the spring rod 52 and is mounted between end plates 54 of the cartridge 14. A split rod connector 57 adjustably connects spring rod 52 to lower end plate 54. Return cartridge 14 is nested in a spring cavity 58 of a frame 24. To actuate a flow control member, the spring 56 of EP0975907A1 pulls on a linkage 42. The linkage 42 then converts axial motion into rotary motion of a valve shaft 86.

An application for US patent US1236826, valve-spring compressor, was filed on 1 December 1916. The patent US1236826 issued on 14 August 1917. US1236826 discloses an assembly with valve stems 1 and with helical springs 2 surrounding the stems 1. A spring seat 3 is mounted to an end portion of each of the springs 2. An operating lever 11 cooperates with a lifting plate 7 to allow compression of the springs 2. To that end, the pivotally connected operating lever 11 is employed to shift the lifting plate 7 along an axis defined by the valve stems 1. US2004/0237259A1 discloses an actuator having the features of the preamble of claim 1.

The present disclosure improves on valves with external valve actuators. The instant disclosure aims at providing a unitary valve actuator with relatively few parts.

### Summary

The present disclosure provides a valve actuator nested in a spring return cartridge. The spring return cartridge encloses a resilient member such as a (helical and / or compression) spring. The spring return cartridge also provides a guide channel with two opposite ends. A first end plate is situated at the first end of the guide channel. A second end plate is situated at the second end of the guide channel. The second end plate sits opposite the first end plate. An arcuate arm joins the second end plate and the guide channel such that the second end plate is aligned in parallel or substantially in parallel to the first end plate. The guide channel, the arcuate arm and the end plate form a single piece.

The valve actuator described above is adapted for low cost manufacture at large scale. During manufacture and / or assembly of the valve actuator, the resilient member is compressed in order that the resilient member becomes shorter than the guide channel. The resilient member then fits inside the guide channel. An auxiliary plate may be placed atop the resilient member to facilitate compression. Once the resilient member is sufficiently compressed, the arm is bent and the second end plate is brought in alignment with the first end plate. Finally, an auxiliary plate interposed between the resilient member and the second end plate may be removed.

The above problems are resolved by a valve actuator and by a return spring cartridge in accordance with the main claims of this disclosure. Preferred embodiments of the present disclosure are covered by the dependent claims.

It is a related object of the instant disclosure to provide a second end plate made up of two separate portions. Each of the two portions is aligned in parallel or substantially in parallel to the first end plate. Also, the two portions are anchored to the guide channel via individual arcuate arms each.

The solution according to the present invention is to provide a second end plate with a suitable aperture such that a plunger and / or a stem and / or a shaft can extend through the aperture.

It is yet another related object of the instant disclosure to provide a second end plate with a flange that enables anchorage and / or secures relative to a frame of a valve. The flange may, in particular, be welded to a frame of a valve. It is also envisaged that a threaded portion protrudes from the second end plate. The latter portion may engage a portion of a frame commensurate with the threaded portion, thereby locking the cartridge to the frame.

It is also object of the instant disclosure to provide a valve actuator wherein the resilient member is affixed to a spring seat and wherein the spring seat is slidable inside the guide channel. The spring seat advantageously allows for adjustable (but permanent) anchorage and / or coupling to a rod extending from the aperture of the second end plate.

It is still another related object of the instant disclosure to provide a valve actuator and / or a spring cartridge that comprises comparatively few parts and is simple in construction, but durable and well adapted to withstand the rough usage to which devices of this character are ordinarily subjected.

### Brief description of the drawings

Various features will become apparent to those skilled in the art from the following detailed description of the disclosed non-limiting embodiments. The drawings that accompany the detailed description can be briefly described as follows:
FIG 1 is a plan view of a unitary valve actuator during manufacture.
FIG 2 is a plan view of a unitary valve actuator with parallel end plates.
FIG 3 is a plan view of a unitary valve actuator with a valve stem anchored to a spring seat.
FIG 4 is a plan view of a unitary valve actuator according to the invention with a single second end plate.
FIG 5 is a plan view of a unitary valve actuator according to the invention with an access aperture.

### Detailed decription

The unitary valve actuator of the instant disclosure is typically part of a valve. The valve provides an enclosure with at least one inlet and with at least one outlet. A fluid path connects the at least one inlet to the at least one outlet. A valve according to the instant disclosure also provides a flow control element situated in the fluid path. In a first position, the flow control element enables fluid flow through the fluid path. In a second position, the flow control element obturates fluid flow. According to an aspect, the flow control element is a throttle.

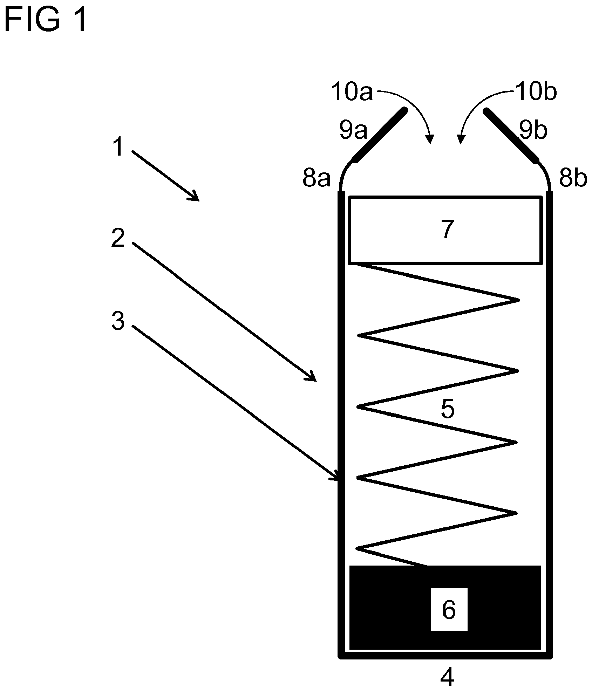

A stem and / or a plunger typically couples the valve element to an actuator. The stem and / or the plunger transmits torque and / or momentum / force from the valve actuator to the valve element, thereby enabling automated adjustments of valve positions. The valve actuator of the instant disclosure is typically flanged on a frame and / or on an enclosure of a valve. That is, the valve actuator sits outside the fluid path. The valve actuator is a unitary valve actuator. FIG 1 depicts a valve actuator 1 according to the instant disclosure during assembly. Valve actuator 1 comprises a cartridge 2 such as a spring cartridge. Cartridge 2 has a guide channel 3, preferably a cylindrical guide channel. It is also envisaged that the cross-section of the guide channel 3 is quadratic, triangular, rectangular and / or polygonal. In an embodiment, the guide channel 3 is a tubular portion and / or a barrel and / or a (longitudinal) channel. In another embodiment, the guide channel 3 is a (longitudinal) chassis. In yet another embodiment, the guide channel 3 is an assembly with a plurality of parallel guide runners such as two, three, five, or even ten guide runners. These guide runners are ideally disposed (symmetrically) around a resilient member 5.

Guide channel 3 provides a first end and a second end. A first end plate 4 is arranged at the first end of guide channel. According to an embodiment, end plate 4 is an end disc. According to a related aspect, the cross-section of end plate 4 matches the cross-section of guide channel 3 or is commensurate with the cross-section of guide channel 3. According to an aspect, first end plate 4 is welded onto guide channel 3 and / or glued onto guide channel 3 and / or bolted to guide channel 3 and / or inserted. It is envisaged that the first end plate 4 is an integral part of the guide channel 3. That is, the first end plate 4 and the guide channel 3 form a single piece and / or are made of the same material(s) and / or are made out of a single piece of material.

A resilient member 5 is situated inside guide channel 3. Guide channel 3 thus encloses resilient member 5 such that resilient member 5 cannot escape. Guide channel 3 may, by way of non-limiting example, comprise slots and / or orifices to the extent that resilient member 5 remains inside guide channel 3.

In an embodiment, resilient member 5 is a spring. Resilient member 5 can, in particular, comprise a helical spring and / or a compression spring and / or a helical compression spring. In an embodiment, resilient member 5 comprises at least a disc spring. The at least a disc spring preferably provides at least an aperture for stem 11. Disc springs confer benefits in terms of providing large torque and / or momentum and / or forces to any appliance coupled to actuator 1 and / or stem 11.

Resilient member 5 is joined to and / or anchored to a seat 6 such as a spring seat. FIG 1 shows the seat 6 arranged adjacent the first end plate 4. Seat 6 generally is slidable along guide channel 3 whilst first end plate 4 is generally not slidable. Seat 6 advantageously joins resilient member 5 at a far end of resilient member 5. Seat 6 can, by way of example, be fitted to seat 6 by means of a welded and / or a glued joint and / or by means of a threaded and / or snap-on connection. Seat 6 ideally has a shape with a cross-section that matches the cross-section of guide channel 3 and / or is commensurate with the cross-section of guide channel 3.

FIG 1 also shows an auxiliary tool 7 arranged at the other far end of resilient member 5. Auxiliary tool 7 is typically inserted during assembly when the resilient member 5 is compressed. Auxiliary tool 7 as such is not connected to and / or joined to and / or affixed to resilient member 5. Consequently, auxiliary tool 7 may be removed sideways (from cartridge 2) upon completion of assembly of valve actuator 1. To that end, the skilled person arranges suitable slots and / or orifices along guide channel 3 such that auxiliary tool 7 can be removed.

Arcuate arms 8a, 8b are arranged at the second end of guide channel 3. FIG 1 shows an arrangement with two arcuate arms 8a, 8b extending from the guide channel 3. In an alternate embodiment, one arcuate arm is provided. Arcuate arms 8a, 8b each extend along a portion of the perimeter of the opening at the second end of guide channel 3. According to an aspect, this portion is approximately 80% of the perimeter and / or approximately 50% of the perimeter and / or approximately 20% of the perimeter.

Advantageously, the arcuate arms 8a, 8b are integral with the guide channel 3. That is, the arcuate arms 8a, 8b and the guide channel 3 form a single piece. The wall thickness of the arcuate arms 8a, 8b is ideally lower than the wall thickness of guide channel 3 in order that the arcuate arms 8a, 8b can be bent. According to an aspect, the thickness of the arcuate arms 8a, 8b is approximately 70% of the wall thickness of guide channel 3 or approximately 50% of the wall thickness of guide channel 3 or approximately 30% of the wall thickness of guide channel 3. The skilled person considers materials employed as well as technical requirements when choosing a wall thickness for the arcuate arms 8a, 8b. The skilled person also chooses suitable materials for the arcuate arms 8a, 8b. With suitably chosen materials these arms 8a, 8b can be bent and / or be deformed and (substantially) remain in their final positions.

The arcuate arms 8a, 8b each extend to second end plates 9a, 9b. FIG 1 shows an arrangement with two end plates 9a, 9b extending from the arms 8a, 8b. In an alternate embodiment, a single end plate is provided and / or joined via a single arm to guide channel 3. According to an embodiment, second end plates 9a, 9b are end discs. According to a related aspect, the cross-sections of second end plates 9a, 9b (or of a single second end plate) can be combined to match the cross-section of guide channel 3. According to another aspect, the cross-sections of second end plates 9a, 9b (or of a single second end plate) can be combined to be commensurate with the cross-section of guide channel 3. According to yet another aspect, the combined cross-sections of end plates 9a, 9b (or of a single second end plate) match and / or are the commensurate with the cross-section of first end plate 4.

It is envisaged that the second end plates 9a, 9b (or the single second end plate) are integral with the arms 8a, 8b. That is, the second end plates 9a, 9b and the arms 8a, 8b and / or the guide channel 3 form a single piece and / or are made of the same material(s). The arms 8a, 8b (or the arm) thus join and / or anchor the second and plates 9a, 9b (or the single second end plate) to guide channel 3. The skilled person can, by way of non-limiting examples, choose suitable materials such as (alloy) steel and / or polymeric materials for these parts.

Due to their ductile nature, the arms 8a, 8b may be bent and / or flexed as indicated by arrows 10a, 10b. In so doing, the second end plates 9a, 9b (or the single second end plate) move and / or are deflected toward their final positions. After bending and / or flexure, the end plates 9a, 9b will remain or substantially remain in their final positions.

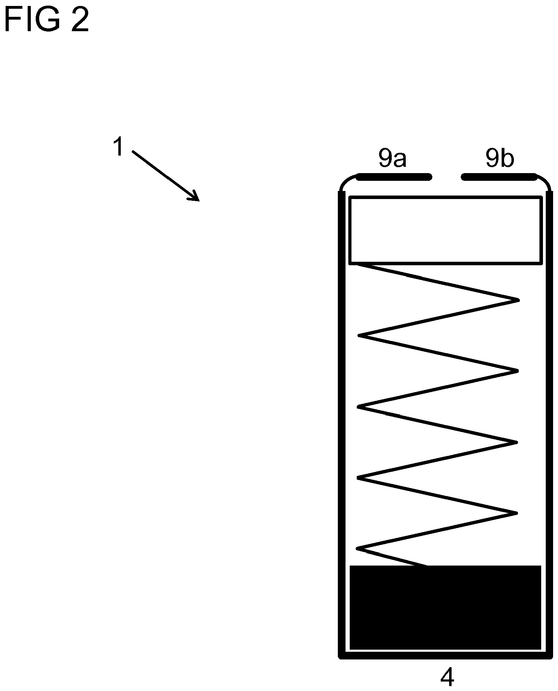

FIG 2 shows the second end plates 9a, 9b in their final positions. The second end plates 9a, 9b (or the single second end plate) are then aligned in parallel or substantially in parallel to the first end plate 4. It is also envisaged that in their final positions, the second end plates 9a, 9b (or the single second end plate) are orientated perpendicular or substantially perpendicular to the walls of guide channel 3.

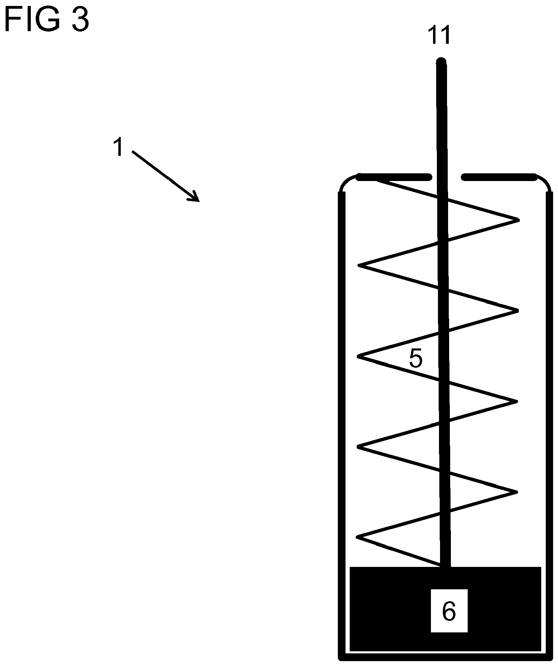

FIG 3 depicts a valve actuator 1 with axially displaceable mobile parts 5, 6, 11. The skilled person envisages application of valve actuator 1 both to axially displaceable flow control elements and to pivotal flow control elements. The skilled artisan applies the valve actuator 1 of the instant disclosure both to axially displaceable flow control elements and to pivotal flow control elements (butterfly valves).

If the second end plates 9a, 9b (or the single second end plate) were sufficiently extended, they would form acute angles with the first end plate 4. In an embodiment, these acute angles are less than 10 degrees, in particular less than 5 degrees or even less than 2 degrees.

The second end plates 9a, 9b (or the single second end plate) in their final positions are arranged such that resilient member 5 can no longer leave or escape from the cartridge 2. That is, resilient member 5 will remain inside the cartridge 2 even after removal of auxiliary tool 7. In an embodiment, the second end plates 9a, 9b (or the single second end plate) loosely support resilient member 5 and / or are not joined to and / or not affixed to resilient member 5.

Now turning to FIG 3, the valve actuator 1 is depicted with a valve stem 11 anchored to seat 6. The stem and / or plunger and / or rod 11 functions to transmit momentum from resilient member 5 via seat 6 to a flow control member. To that end, stem and / or plunger and / or rod 11 is to be (mechanically) coupled to a flow control member of a valve.

The second end plates 9a, 9b (or the single second end plate) provide a suitable aperture such that stem and / or plunger and / or rod 11 can extend from seat 6 inside cartridge 2 to a flow control member situated outside cartridge 2. The aperture preferably has a circular cross-section. According to an aspect, the cross-section of the aperture for the stem and / or the plunger and / or the rod 11 is triangular, quadratic, rectangular and / or polygonal. The aperture of the second end plates 9a, 9b (or of the single second end plate) has a depth dimension that is parallel to stem and / or plunger and / or rod 11. The aperture of the second end plates 9a, 9b (or of the single second end plate) also has a diameter dimension that is perpendicular to stem and / or plunger and / or rod 11. It is envisaged that the diameter dimension of the aperture exceeds its depth dimension at least by a factor 2 and / or at least by a factor 5 and / or at least by a factor 10.

In order for the assembly to actuate a flow control member, actuator 1 can be attached to a frame and / or to a housing of valve. To that end, the second end plates 9a, 9b (or the single second end plate) provide a flange pointing away from seat 6 and / or away from resilient member 5. The flange of the second end plates 9a, 9b (or of the single second end plate) generally is opposite the surface that (loosely) supports resilient member 5. Valve actuator 1 is advantageously affixed to the frame or to the housing by welding (at least one of) the flange to the frame or to the housing.

The skilled person also envisages that the flange of the end plates 9a, 9b (or of the single second end plate) can be soldered, in particular soldered using brazing solder, to a frame and / or to an enclosure of a valve. The skilled person still further envisages that the flange of the end plates 9a, 9b (or of the single second end plate) can be (epoxy) glued to a frame and / or to an enclosure of valve.

In an alternate embodiment, the flange of the second end plates 9a, 9b (or of the single second end plate) provides a threaded portion (protruding from the surface). The protrusion with the threaded portion enables locking engagement of valve actuator 1 to a frame and / or to an enclosure of a valve. To that end, the frame and / or the enclosure also provides a threaded portion that is compatible with the threaded portion of the protrusion. That is, the threaded portion of the protrusion allows a bolted joint between the cartridge 2 and a frame and / or an enclosure of a valve.

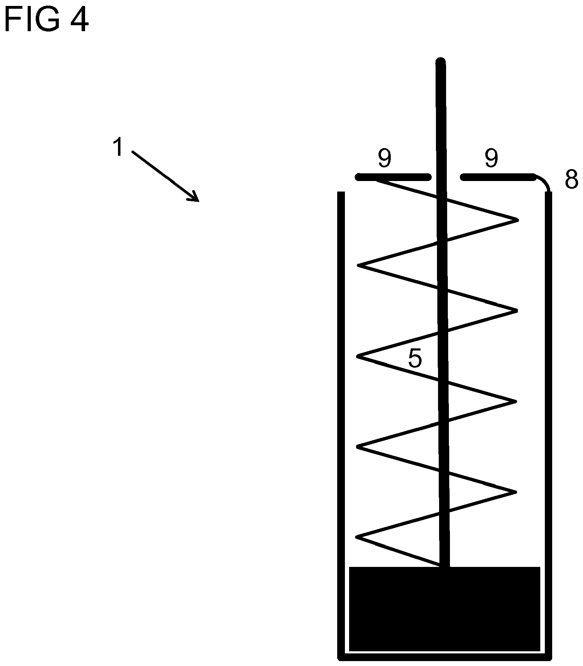

Now referring to FIG 4, a valve actuator 1 with a single second end plate 9 is shown. The single second end plate 9 is anchored to the guide channel 3 via a single arcuate arm 8.

During manufacture and / or assembly, the single (deformable) arm 8 is bent toward its final position as shown on FIG 4. In so doing, the single second end plate 9 moves and / or is deflected toward its final positions. After bending and / or flexure, the end plate 9 will remain or substantially remain in its final position.

If second end plate 9 was sufficiently extended, it would form an acute angle with the first end plate 4. In an embodiment, this acute angle is less than 10 degrees, in particular less than 5 degrees or even less than 2 degrees.

The second end plate 9 provides a suitable aperture such that stem and / or plunger and / or rod 11 can extend from seat 6 inside cartridge 2 to a flow control member situated outside cartridge 2. The aperture preferably has a circular cross-section. According to an aspect, the cross-section of the aperture for stem 11 is triangular, quadratic, rectangular and / or polygonal. The aperture of the second end plate 9 has a depth dimension that is parallel to stem and / or plunger and / or rod 11. The aperture of the second end plate 9 also has a diameter dimension that is perpendicular to stem and / or plunger and / or rod 11. It is envisaged that the diameter dimension of the aperture exceeds its depth dimension at least by a factor 2 and / or at least by a factor 5 and / or at least by a factor 10.

In order for the assembly to actuate a flow control member, actuator 1 can be attached to a frame and / or to a housing of valve. To that end, the single second end plate 9 provides a flange pointing away from seat 6 and / or away from resilient member 5. The flange of the single second end plate 9 generally is opposite the surface that (loosely) supports resilient member 5. Valve actuator 1 is advantageously affixed to the frame or to the housing by welding the flange to the frame and / or to the housing.

The skilled person also envisages that the flange of the single second end plate 9 can be soldered, in particular soldered using brazing solder, to a frame and / or to an enclosure of valve. The skilled person still further envisages that the flange of the single second end plate 9 can be (epoxy) glued to a frame and / or to an enclosure of valve.

The skilled person also envisages access apertures provided by the cartridge 2. A suitable access aperture allows adjustments of the positions of the seat 6 and / or of the resilient member 5. The position of the seat 6 may, for instance, be adjusted when the seat 6 is joined with the stem 11. An access aperture may also be required for maintenance and / or repair of the assembly.

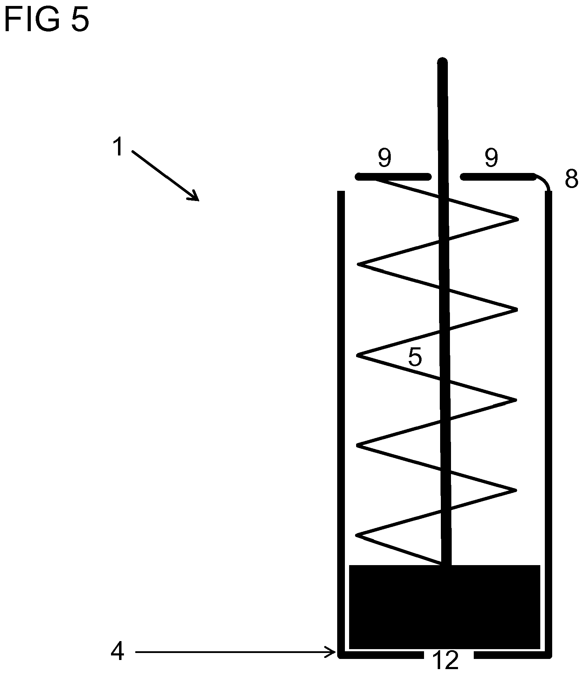

The end plate 4 of FIG 5 provides such an access aperture 12. A tool such as a pin or a screwdriver can be inserted into access aperture 12 in order to shift seat 6 along guide channel 3. The skilled person chooses suitable dimensions for an opening such as access aperture 12.

The access aperture 12 preferably has a circular cross-section. According to an aspect, the cross-section of the access aperture 12 is triangular, quadratic, rectangular and / or polygonal. The aperture of the access aperture 12 has a depth dimension that is parallel to stem and / or plunger and / or rod 11. The access aperture 12 also has a diameter dimension that is perpendicular to stem and / or plunger and / or rod 11. It is envisaged that the diameter dimension of the opening 12 exceeds its depth dimension at least by a factor 2 and / or at least by a factor 5 and / or at least by a factor 10.

The skilled person also envisages access apertures situated in any (lateral) walls of guide channel 3. The skilled person does, in particular, envisage suitable lateral access apertures for removal of auxiliary tool 7.

In an alternate embodiment, the outer surface of the single second end plate 9 provides a threaded portion (protruding from the surface). The protrusion with the threaded portion enables locking engagement of valve actuator 1 to a frame and / or to an enclosure of a valve. To that end, the frame and / or the enclosure also provides a threaded portion that is compatible with the threaded portion of the protrusion. That is, the threaded portion of the protrusion allows a bolted joint between the cartridge 2 and a frame and / or an enclosure of a valve.

In other words, the instant disclosure teaches a valve actuator (1) comprising:
a valve stem (11),
a cartridge (2) with a guide channel (3),
wherein the guide channel (3) has a first end portion and a second end portion, wherein the second end portion of the guide channel (3) is situated opposite the first end portion of the guide channel (3),
a resilient member (5) situated in the guide channel (3),
the valve actuator (1) comprising a seat (6) slidably situated in the guide channel (3) and joined to the resilient member (5) and joined to the valve stem (11),
wherein the resilient member(5) is configured to displace the seat (6) along said guide channel (3) from a first position to a second position,
wherein the seat (6) is configured to displace the valve stem (11) along said guide channel (3) from the first position to the second position,
   the cartridge (2) comprising a first end plate (4) disposed at the first end portion of the guide channel (3) and at least a second end plate (9; 9a) disposed at the second end portion of the guide channel (3),
wherein the cartridge (2) also comprises at least an arcuate arm (8; 8a),
wherein the at least a second end plate (9; 9a) is anchored to the guide channel (3) via the at least an arcuate arm (8; 8a),
   wherein the guide channel (3) is integral with the at least a second end plate (9; 9a) and with the at least an arcuate arm (8; 8a).

It is envisaged that the guide channel (3) and the at least a second end plate (9; 9a) and the at least an arcuate arm (8; 8a) form a single piece. It is also envisaged that the at least an arcuate arm (8; 8a) bends at least 45° and / or at least 60° and / or approximately 90°. It is further envisaged that the at least an arcuate arm (8; 8a) is or comprises at least a curved arm (8a). It is still further envisaged that the at least an arcuate arm (8; 8a) is made of a ductile material. The ductile-brittle transition temperature of the material of the at least an arcuate arm (8; 8a) is, by way of non-limiting example, less than 180 K and / or less than 300 K and / or less than 350 K. It is envisaged that the wall thickness of the at least an arcuate arm (8; 8a) is at most 50% or at most 70% or at most 80% of the wall thickness of the guide channel (3). It is also envisaged that the wall thickness of the at least an arcuate arm (8; 8a) is at most 50% or at most 70% or at most 80% or at most 100% of the wall thickness of the at least a second end plate (9; 9a).

According to an aspect, the at least an arcuate arm (8; 8a) extends and / or protrudes from (a lateral wall of) the guide channel (3). According to another aspect, the at least a second end plate (9; 9a) extends and / or protrudes from the at least an arcuate arm (8; 8a).

In an embodiment, the at least a second end plate (9; 9a) is aligned in parallel or substantially in parallel to the first end plate (4).

The instant disclosure also teaches one of the aforementioned valve actuators (1), wherein the guide channel (3) is or comprises a longitudinal guide channel.

It is also envisaged that the guide channel (3) is or comprises a barrel, in particular a longitudinal barrel.

The instant disclosure also teaches one of the aforementioned valve actuators (1), wherein the valve stem (11) comprises a first portion disposed inside the cartridge (2).

The instant disclosure also teaches one of the aforementioned valve actuators (1),
wherein the at least a second end plate (9; 9a) comprises an aperture, and
wherein the valve stem (11) extends through the aperture of the at least a second end plate (9; 9a), and
wherein the valve stem (11) comprises a second portion disposed outside the cartridge (2).

The instant disclosure also teaches one of the aforementioned valve actuators (1),
wherein the at least a second end plate (9; 9a) partitions the valve stem (11) such that the second portion of the valve stem (11) is disposed outside the cartridge (2) and the first portion of the valve stem (11) is disposed inside the cartridge (2).

The instant disclosure also teaches one of the aforementioned valve actuators (1),
wherein the valve stem (11) is configured to couple to a throttle situated in a fluid path of a valve.

It is envisaged that the valve stem (11) is configured to mechanically couple to a throttle situated in a fluid path of a valve. It is also envisaged that the valve stem (11) is configured to directly couple to a throttle situated in a fluid path of a valve.

The instant disclosure also teaches one of the aforementioned valve actuators (1),
wherein the resilient member (5) has a first end portion and a second end portion opposite the first end portion of the resilient member (5),
wherein the first end portion of the resilient member (5) is anchored to the seat (6),
wherein the second end portion of the resilient member (5) is supported by the at least a second end plate (9; 9a).

It is envisaged that the second end portion of the resilient member (5) is loosely supported by the at least a second end plate (9; 9a). It is also envisaged that the second end portion of the resilient member (5) sits on and / or is pressed against the at least a second end plate (9; 9a).

The instant disclosure also teaches one of the aforementioned valve actuators (1),
the cartridge (2) additionally comprising at least another second end plate (9b) disposed at the second end portion of the guide channel (3),
wherein the cartridge (2) also comprises at least another arcuate arm (8b),
wherein the at least another second end plate (9b) is anchored to the guide channel (3) via the at least another arcuate arm (8b),
wherein the guide channel (3) is integral with the at least another second end plate (9b) and with the at least another arcuate arm (8b).

It is envisaged that the guide channel (3) and the at least another second end plate (9b) and the at least another arcuate arm (8b) form a single piece. It is also envisaged that the at least another arcuate arm (8b) bends at least 45° and / or at least 60° and / or approximately 90°. It is further envisaged that the at least another arcuate arm (8b) is or comprises at least another curved arm (8b). It is still further envisaged that the at least another arcuate arm (8b) is made of a ductile material. The ductile-brittle transition temperature of the material of the at least another arcuate arm (8b) is, by way of example, less than 180 K and / or less than 300 K and / or less than 350 K. It is envisaged that the wall thickness of the at least another arcuate arm (8b) is at most 50% or at most 70% or at most 80% of the wall thickness of the guide channel (3). It is also envisaged that the wall thickness of the at least another arcuate arm (8b) is at most 50% or at most 70% or at most 80% of the wall thickness of the at least another second end plate (9b).

According to an aspect, the at least another arcuate arm (8b) extends and / or protrudes from the (a lateral wall of) guide channel (3). According to another aspect, the at least another second end plate (9b) extends and / or protrudes from the at least another arcuate arm (8b).

The instant disclosure also teaches one of the aforementioned valve actuators (1),
wherein the at least a second end plate (9a) is aligned substantially in parallel to the at least another second end plate (9b).

It is envisaged that the at least a second end plate (9a) is aligned in parallel to the at least another second end plate (9b). It is also envisaged that the at least a second end plate (9a) is aligned and / or stands perpendicular to the guide channel (3) and / or to a side wall of the guide channel (3). It is also envisaged that the at least another second end plate (9a) is aligned and / or stands perpendicular to the guide channel (3) and / or to a lateral wall of the guide channel (3).

The instant disclosure also teaches one of the aforementioned valve actuators (1),
wherein the first end plate (4) comprises an access aperture (12) for access to the seat (6).

The instant disclosure also teaches one of the aforementioned valve actuators (1),
wherein the seat (6) is disposed adjacent the first end plate (4).

The instant disclosure also teaches one of the aforementioned valve actuators (1),
wherein the at least a second end plate (9; 9a) comprises a flange,
wherein the flange of the at least a second end plate (9; 9a) is configured to be joined to an enclosure and / or to a frame of a valve.

It is envisaged that the flange of the at least a second end plate (9; 9a) is configured to be joined to an enclosure of a valve by welding and / or by gluing and / or by soldering, in particular by hard soldering.

The instant disclosure also teaches one of the aforementioned valve actuators (1),
wherein the at least a second end plate (9; 9a) comprises a flange with a threaded portion.

The instant disclosure also teaches one of the aforementioned valve actuators (1),
wherein the resilient member (5) is or comprises a compression spring.

The instant disclosure also teaches one of the aforementioned valve actuators (1),
wherein the resilient member (5) is or comprises a helical spring.

The instant disclosure also teaches one of the aforementioned valve actuators (1),
wherein the resilient member (5) is or comprises a disc spring, in particular a disc spring with an aperture for valve stem 11.

Any steps of a method according to the present disclosure may be embodied in hardware, in a software module executed by a processor, in a cloud computing arrangement, or in a combination thereof. The software may include a firmware, a hardware driver run in the operating system, or an application program. Thus, the invention also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the invention and that numerous changes may be made therein without departing the scope of the disclosure as defined by the following claims. It should also be understood that the disclosure is not restricted to the illustrated embodiments and that various modifications can be made within the scope of the following claims.

### Reference numerals

1 valve actuator
2 (spring) cartridge
3 longitudinal guide channel, enclosure
4 end plate
5 resilient member
6 seat
7 auxiliary tool
8 arms
9, 9a, 9b end plate (s)
10, 10a, 10b arrows
11 stem and / or plunger and / or rod
12 access aperture

## Claims

1. A valve actuator (1) comprising:
a valve stem (11);
a cartridge (2) with a guide channel (3);
wherein the guide channel (3) has a first end portion and a second end portion, wherein the second end portion of the guide channel (3) is situated opposite the first end portion of the guide channel (3);
a resilient member (5) situated in the guide channel (3),
the valve actuator (1) comprising a seat (6) slidably situated in the guide channel (3) and joined to the resilient member (5) and joined to the valve stem (11);
wherein the resilient member(5) is configured to displace the seat (6) along said guide channel (3) from a first position to a second position;
wherein the seat (6) is configured to displace the valve stem (11) along said guide channel (3) from the first position to the second position;
the cartridge (2) comprising a first end plate (4) disposed at the first end portion of the guide channel (3) and at least a second end plate (9; 9a) disposed at the second end portion of the guide channel (3);
wherein the cartridge (2) also comprises at least an arcuate arm (8; 8a);
wherein the at least a second end plate (9; 9a) is anchored to the guide channel (3) via the at least an arcuate arm (8; 8a);
wherein the guide channel (3) is integral with the at least a second end plate (9; 9a) and with the at least an arcuate arm (8; 8a); **characterized in that**
the at least a second end plate (9; 9a) comprises an aperture; and **in that**
the valve stem (11) extends through the aperture of the at least a second end plate (9; 9a); and **in that**
wherein the valve stem (11) comprises a second portion disposed outside the cartridge (2).

2. The valve actuator (1) according to claim 1, wherein the guide channel (3) is a longitudinal guide channel.

3. The valve actuator (1) according to any of the claims 1 to 2,
wherein the valve stem (11) comprises a first portion disposed inside the cartridge (2).

4. The valve actuator (1) according to any of the claims 1 to 3,
wherein the at least a second end plate (9; 9a) partitions the valve stem (11) such that the second portion of the valve stem (11) is disposed outside the cartridge (2) and the first portion of the valve stem (11) is disposed inside the cartridge (2).

5. The valve actuator (1) according to any of the claims 1 to 4,
wherein the valve stem (11) is configured to couple to a throttle situated in a fluid path of a valve.

6. The valve actuator (1) according to any of the claims 1 to 5,
wherein the resilient member (5) has a first end portion and a second end portion opposite the first end portion of the resilient member (5);
wherein the first end portion of the resilient member (5) is anchored to the seat (6);
wherein the second end portion of the resilient member (5) is supported by the at least a second end plate (9; 9a).

7. The valve actuator (1) according to any of the claims 1 to 6, the cartridge (2) additionally comprising at least another second end plate (9b) disposed at the second end portion of the guide channel (3);
wherein the cartridge (2) also comprises at least another arcuate arm (8b);
wherein the at least another second end plate (9b) is anchored to the guide channel (3) via the at least another arcuate arm (8b);
wherein the guide channel (3) is integral with the at least another second end plate (9b) and with the at least another arcuate arm (8b).

8. The valve actuator (1) according to claim 7,
wherein the at least a second end plate (9a) is aligned substantially in parallel to the at least another second end plate (9b).

9. The valve actuator (1) according to any of the claims 1 to 8,
wherein the first end plate (4) comprises an access aperture (12) for access to the seat (6).

10. The valve actuator (1) according to any of the claims 1 to 9,
wherein the seat (6) is disposed adjacent the first end plate (4).

11. The valve actuator (1) according to any of the claims 1 to 10,
wherein the at least a second end plate (9; 9a) comprises a flange;
wherein the flange of the at least a second end plate (9; 9a) is configured to be joined to an enclosure of a valve.

12. The valve actuator (1) according to any of the claims 1 to 11,
wherein the at least a second end plate (9; 9a) comprises a flange with a threaded portion.

13. The valve actuator according to any of the claims 1 to 12,
wherein the resilient member (5) is a compression spring.

14. The valve actuator according to any of the claims 1 to 13,
wherein the resilient member (5) is a helical spring.

## Patentansprüche

1. Ventilaktuator (1), der Folgendes umfasst:
einen Ventilschaft (11);
eine Kartusche (2) mit einem Führungskanal (3);
wobei der Führungskanal (3) einen ersten Endabschnitt und einen zweiten Endabschnitt aufweist, wobei sich der zweite Endabschnitt des Führungskanals (3) gegenüber dem ersten Endabschnitt des Führungskanals (3) befindet;
ein elastisches Glied (5), das sich in dem Führungskanal (3) befindet, wobei der Ventilaktuator (1) einen Sitz (6) umfasst, der sich verschiebbar in dem Führungskanal (3) befindet und mit dem elastischen Glied (5) verbunden und mit dem Ventilschaft (11) verbunden ist;
wobei das elastische Glied (5) dazu konfiguriert ist, den Sitz (6) entlang dem Führungskanal (3) aus einer ersten Stellung in eine zweite Stellung zu verschieben;
wobei der Sitz (6) dazu konfiguriert ist, den Ventilschaft (11) entlang dem Führungskanal (3) aus einer ersten Stellung in eine zweite Stellung zu verschieben;
wobei die Kartusche (2) eine erste Endplatte (4), die an dem ersten Endabschnitt des Führungskanals (3) angeordnet ist, und mindestens eine zweite Endplatte (9; 9a), die an dem zweiten Endabschnitt des Führungskanals (3) angeordnet ist, umfasst;
wobei die Kartusche (2) des Weiteren mindestens einen bogenförmigen Arm (8; 8a) umfasst;
wobei die mindestens eine zweite Endplatte (9; 9a) mit dem Führungskanal (3) über den mindestens einen bogenförmigen Arm (8; 8a) verankert ist;
wobei der Führungskanal (3), die mindestens eine zweite Endplatte (9; 9a) und der mindestens eine bogenförmige Arm (8; 8a) aus einem Stück sind; **dadurch gekennzeichnet, dass**
die mindestens eine zweite Endplatte (9; 9a) eine Aussparung umfasst; und dass
sich der Ventilschaft (11) durch die Aussparung der mindestens einen zweiten Endplatte (9; 9a) hindurch erstreckt; und
wobei der Ventilschaft (11) einen zweiten Abschnitt umfasst, der außerhalb der Kartusche (2) angeordnet ist.

2. Der Ventilaktuator (1) nach Anspruch 1, wobei der Führungskanal (3) ein längs verlaufender Führungskanal ist.

3. Der Ventilaktuator (1) nach einem der Ansprüche 1-2,
wobei der Ventilschaft (11) einen ersten Abschnitt umfasst, der innerhalb der Kartusche (2) angeordnet ist.

4. Der Ventilaktuator (1) nach einem der Ansprüche 1-3,
wobei die mindestens eine zweite Endplatte (9; 9a) den Ventilschaft (11) derart unterteilt, dass der zweite Abschnitt des Ventilschafts (11) außerhalb der Kartusche (2) angeordnet ist und der erste Abschnitt des Ventilschafts (11) innerhalb der Kartusche (2) angeordnet ist.

5. Der Ventilaktuator (1) nach einem der Ansprüche 1-4,
wobei der Ventilschaft (11) zur Kopplung mit einer Drosselvorrichtung, die sich in einem Fluidpfad eines Ventils befindet, konfiguriert ist.

6. Der Ventilaktuator (1) nach einem der Ansprüche 1-5,
wobei das elastische Glied (5) einen ersten Endabschnitt und einen zweiten Endabschnitt gegenüber dem ersten Endabschnitt des elastischen Glieds (5) aufweist;
wobei der erste Endabschnitt des elastischen Glieds (5) mit dem Sitz (6) verankert ist;
wobei der zweite Endabschnitt des elastischen Glieds (5) von der mindestens einen zweiten Endplatte (9; 9a) gestützt wird.

7. Der Ventilaktuator (1) nach einem der Ansprüche 1-6, wobei die Kartusche (2) zusätzlich mindestens eine weitere zweite Endplatte (9b) umfasst, die an dem zweiten Endabschnitt des Führungskanals (3) angeordnet ist;
wobei die Kartusche (2) des Weiteren mindestens einen weiteren bogenförmigen Arm (8b) umfasst;
wobei die mindestens eine weitere zweite Endplatte (9b) über den mindestens einen weiteren bogenförmigen Arm (8b) mit dem Führungskanal (3) verankert ist;
wobei der Führungskanal (3) mit der mindestens einen weiteren zweiten Endplatte (9b) und mit dem mindestens einen weiteren bogenförmigen Arm (8b) integral ist.

8. Der Ventilaktuator (1) nach Anspruch 7,
wobei die mindestens eine zweite Endplatte (9a) im Wesentlichen parallel zu der mindestens einen weiteren zweiten Endplatte (9b) ausgerichtet ist.

9. Der Ventilaktuator (1) nach einem der Ansprüche 1-8,
wobei die erste Endplatte (4) eine Zugangsaussparung (12) für Zugang zu dem Sitz (6) umfasst.

10. Der Ventilaktuator (1) nach einem der Ansprüche 1-9,
wobei der Sitz (6) neben der ersten Endplatte (4) angeordnet ist.

11. Der Ventilaktuator (1) nach einem der Ansprüche 1-10,
wobei die mindestens eine zweite Endplatte (9; 9a) einen Flansch umfasst;
wobei der Flansch der mindestens einen zweiten Endplatte (9; 9a) zur Verbindung mit einem Gehäuse eines Ventils konfiguriert ist.

12. Der Ventilaktuator (1) nach einem der Ansprüche 1-11,
wobei die mindestens eine zweite Endplatte (9; 9a) einen Flansch mit einem Gewindeabschnitt umfasst.

13. Der Ventilaktuator nach einem der Ansprüche 1-12,
wobei das elastische Glied (5) eine Druckfeder ist.

14. Der Ventilaktuator nach einem der Ansprüche 1-13,
wobei das elastische Glied (5) eine Schraubenfeder ist.

## Revendications

1. Actionneur de vanne (1) comprenant :
une tige de vanne (11) ;
une cartouche (2) avec un canal de guidage (3) ;
dans lequel le canal de guidage (3) a une première partie d'extrémité et une seconde partie d'extrémité, dans lequel la seconde partie d'extrémité du canal de guidage (3) est située à l'opposé de la première partie d'extrémité du canal de guidage (3) ;
un élément élastique (5) situé dans le canal de guidage (3), l'actionneur de vanne (1) comprenant un siège (6) situé de manière coulissante dans le canal de guidage (3) et relié à l'élément élastique (5) et relié à la tige de vanne (11) ;
dans lequel l'élément élastique (5) est configuré pour déplacer le siège (6) le long dudit canal de guidage (3) d'une première position à une seconde position ;
dans lequel le siège (6) est configuré pour déplacer la tige de vanne (11) le long dudit canal de guidage (3) de la première position à la seconde position ;
la cartouche (2) comprenant une première plaque d'extrémité (4) disposée au niveau de la première partie d'extrémité du canal de guidage (3) et au moins une seconde plaque d'extrémité (9 ; 9a) disposée au niveau de la seconde partie d'extrémité du canal de guidage (3) ;
dans lequel la cartouche (2) comprend également au moins un bras arqué (8 ; 8a) ;
dans lequel l'au moins une seconde plaque d'extrémité (9 ; 9a) est ancrée au canal de guidage (3) par l'intermédiaire de l'au moins un bras arqué (8 ; 8a) ;
dans lequel le canal de guidage (3) fait partie intégrante de l'au moins une seconde plaque d'extrémité (9 ; 9a) et de l'au moins un bras arqué (8 ; 8a) ; **caractérisé en ce que**
l'au moins une seconde plaque d'extrémité (9 ; 9a) comprend une ouverture ; et **en ce que**
la tige de vanne (11) s'étend à travers l'ouverture de l'au moins une seconde plaque d'extrémité (9 ; 9a); et
dans lequel la tige de vanne (11) comprend une seconde partie disposée à l'extérieur de la cartouche (2).

2. L'actionneur de vanne (1) selon la revendication 1, dans lequel le canal de guidage (3) est un canal de guidage longitudinal.

3. L'actionneur de vanne (1) selon l'une quelconque des revendications 1 à 2,
dans lequel la tige de vanne (11) comprend une première partie disposée à l'intérieur de la cartouche (2).

4. L'actionneur de vanne (1) selon l'une quelconque des revendications 1 à 3,
dans lequel l'au moins une seconde plaque d'extrémité (9 ; 9a) divise la tige de vanne (11) de sorte que la seconde partie de la tige de vanne (11) est disposée à l'extérieur de la cartouche (2) et la première partie de la tige de vanne (11) est disposée à l'intérieur de la cartouche (2).

5. L'actionneur de vanne (1) selon l'une quelconque des revendications 1 à 4,
dans lequel la tige de vanne (11) est configurée pour se coupler à un étranglement situé dans un trajet de fluide d'une vanne.

6. L'actionneur de vanne (1) selon l'une quelconque des revendications 1 à 5,
dans lequel l'élément élastique (5) a une première partie d'extrémité et une seconde partie d'extrémité opposée à la première partie d'extrémité de l'élément élastique (5) ;
dans lequel la première partie d'extrémité de l'élément élastique (5) est ancrée au siège (6) ;
dans lequel la seconde partie d'extrémité de l'élément élastique (5) est supportée par l'au moins une seconde plaque d'extrémité (9 ; 9a).

7. L'actionneur de vanne (1) selon l'une quelconque des revendications 1 à 6, la cartouche (2) comprenant en outre au moins une autre seconde plaque d'extrémité (9b) disposée au niveau de la seconde partie d'extrémité du canal de guidage (3) ;
dans lequel la cartouche (2) comprend également au moins un autre bras arqué (8b) ;
dans lequel l'au moins une autre seconde plaque d'extrémité (9b) est ancrée au canal de guidage (3) par l'intermédiaire de l'au moins un autre bras arqué (8b) ;
dans lequel le canal de guidage (3) fait partie intégrante de l'au moins une autre seconde plaque d'extrémité (9b) et de l'au moins un autre bras arqué (8b).

8. L'actionneur de vanne (1) selon la revendication 7,
dans lequel l'au moins une seconde plaque d'extrémité (9a) est alignée sensiblement parallèlement à l'au moins une autre seconde plaque d'extrémité (9b).

9. L'actionneur de vanne (1) selon l'une quelconque des revendications 1 à 8,
dans lequel la première plaque d'extrémité (4) comprend une ouverture d'accès (12) pour accéder au siège (6).

10. L'actionneur de vanne (1) selon l'une quelconque des revendications 1 à 9,
dans lequel le siège (6) est disposé de manière adjacente à la première plaque d'extrémité (4).

11. L'actionneur de vanne (1) selon l'une quelconque des revendications 1 à 10,
dans lequel l'au moins une seconde plaque d'extrémité (9 ; 9a) comprend une bride ;
dans lequel la bride de l'au moins une seconde plaque d'extrémité (9 ; 9a) est configurée pour être reliée à un boîtier d'une vanne.

12. L'actionneur de vanne (1) selon l'une quelconque des revendications 1 à 11,
dans lequel l'au moins une seconde plaque d'extrémité (9 ; 9a) comprend une bride avec une partie filetée.

13. L'actionneur de vanne selon l'une quelconque des revendications 1 à 12,
dans lequel l'élément élastique (5) est un ressort de compression.

14. L'actionneur de vanne selon l'une quelconque des revendications 1 à 13,
dans lequel l'élément élastique (5) est un ressort hélicoïdal.
